## Europäisches Patentamt
## European Patent Office
## Office européen des brevets

(19)

(11) Veröffentlichungsnummer: **0 084 872**
**B1**

(12) # EUROPÄISCHE PATENTSCHRIFT

(45) Veröffentlichungstag der Patentschrift:
29.06.88

(51) Int. Cl.⁴: **A 01 C 3/06,** A 01 C 17/00

(21) Anmeldenummer: **83100532.7**

(22) Anmeldetag: **21.01.83**

(54) **Landwirtschaftliches Streufahrzeug.**

(30) Priorität: 21.01.82 DE 3201697
10.02.82 DE 3204604
17.02.82 DE 3205691
21.04.82 DE 3214769
12.05.82 DE 3217919

(43) Veröffentlichungstag der Anmeldung:
03.08.83 Patentblatt 83/31

(45) Bekanntmachung des Hinweises auf die Patenterteilung:
29.06.88 Patentblatt 88/26

(84) Benannte Vertragsstaaten:
AT CH DE FR GB LI

(56) Entgegenhaltungen:
FR-A-2 125 811
FR-A-2 136 540
FR-A-2 368 212
US-A-2 162 689
US-A-3 232 627

(73) Patentinhaber: KUHN S.A., 4, Impasse des
Fabriques, F-67700 Saverne (FR)

(72) Erfinder: Weichel, Ernst, Bahnhofstrasse 1, D-7326
Heiningen (DE)

(74) Vertreter: Seemann, Norbert W., Brehmstrasse 37,
D-7320 Göppingen (DE)

EP 0 084 872 B1

LIBER, STOCKHOLM 1988

## Beschreibung

Die Erfindung bezieht sich auf ein landwirtschaftliches Fahrzeug zum Transportieren und gleichmäßigen Ausstreuen von Stallmist o.ä. Düngemitteln in einer baulichen Ausgestaltung mit einem sog. Scheibenstreuwerk nach dem Oberbegriff des Hauptanspruches.

Ein derartiges Fahrzeug ist beispielsweise aus der FR-A-2 368 212 bekannt und weist am Fahrzeugende ein Querförderband mit seitlich daran anschließender, weitestgehend horizontal umlaufender Streu- bzw. Verteilerscheibe auf.

Ein derartiges Gerät ist aber mit dem großen Mangel behaftet, zum einem nur nach einer Seite und in begrenztem, starren Abwurfwinkel den Dünger ausstreuen zu können und zum anderen auch baulich sehr kostenaufwendig sowie störanfällig im Hinblick auf alle seine Antriebs- und Steuerungsteile.

Diese Nachteile zu beseitigen und ein universell einsetzbares Streugerät zu schaffen, ist somit Aufgabe der vorliegenden Erfindung. Speziell wird dabei angestrebt, die Verbesserung der Streueigenschaften gegenüber den bekannten Streuwagen, insbesondere die Schaffung von Möglichkeiten zur Erzielung unterschiedlichster, den jeweiligen Bedarfsfällen angepaßter Streubilder mit ein und demselben Streuwagen bzw. Streugerät, Vergleichmäßigung der Streudichte über die gesamte Fläche der einzelnen Streubilder bei gleichzeitiger Vermeidung unnötiger Fahrspuren und bauliche Vereinfachung der verschiedenen Streuwerke in der Art ihrer lösbaren Befestigung und antriebsseitigen Koppelung mit dem jeweiligen Streuwagen.

Gelöst wird diese Gesamtaufgabe durch die in den Patentansprüchen angegebenen baulichen Mittel und Maßnahmen, die im einzelnen in den Zeichnungen zumeist schematisch angedeutet und anhand dieser Darstellungen mit Vorteil und Wirkungsangaben in der Zeichnungsbeschreibung auch im Detail näher erläutert sind.

In den Zeichnungen zeigen:

Fig. 1 bis Fig. 6 unterschiedliche Streubilder bei einem Streuscheibenpaar mit ausschließlich gegenläufigem Drehsinn sowie mit oder ohne Drehsinnwechsel als Ansicht von oben,

Fig. 7 und Fig. 8 dasselbe bei einem Streuscheibenpaar und mit gleichlaufendem Drehsinn, wechselweise links oder rechts,

Fig. 9 ein erfindungsgemäßes Scheibenstreu-Werk in Ansicht,

Fig. 10 eine Draufsicht zu Fig. 9,

Fig. 11 die Draufsicht auf eine Variante am erfindungsgemäßen Scheibenstreuwerk,

Fig. 12 eine Alternativausführung zu Fig. 11,

Fig. 13 eine weitere Alternative, ebenfalls in Draufsicht,

Fig. 14 eine bauliche Variante zu Fig. 9,

Fig. 15 eine Draufsicht zu Fig. 14,

Fig. 16 das erfinderische Grundsystem in Anwendung bei einem Einscheibenstreuwerk,

Fig. 17 eine Draufsicht zu Fig. 16,

Fig. 18 eine Ansicht auf das Anttriebssystem des erfindungsgemäßen Streuwerks in Fahrtrichtung,

Fig. 19 eine Seitenansicht zu Fig. 18,

Fig. 20 eine Draufsicht zu Fig. 19,

Fig. 21 eine Alternativausführung des Antriebssystems nach Fig. 18,

Fig. 22 eine Seitenansicht zu Fig. 21,

Fig. 23 eine Draufsicht zu Fig. 22,

Fig. 24 eine weitere Antriebsvariante in Seitenansicnt und

Fig. 25 eine Draufsicht zu Fig. 24.

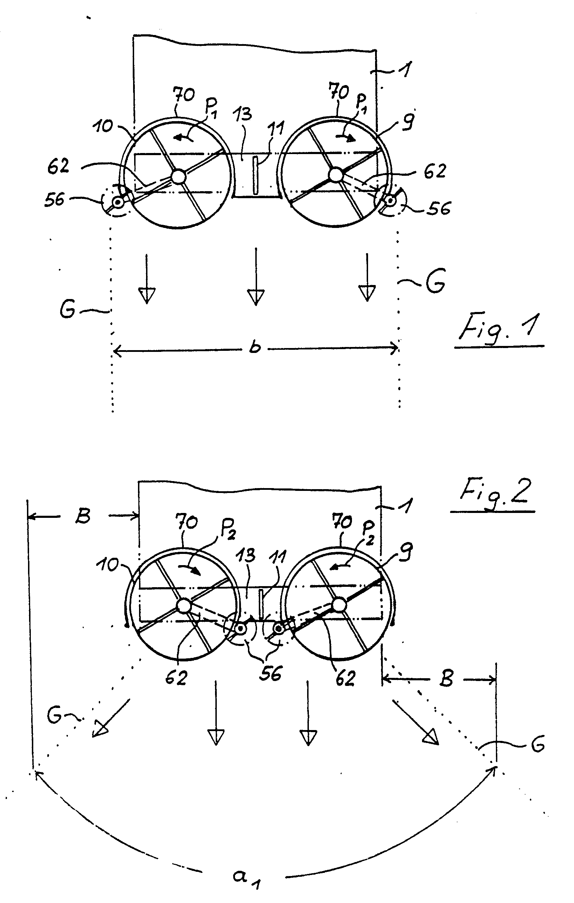

In den Fig. 1 und 2 wird zunächst einmal veranschaulicht, wie mit ein und derselben Grundausführung der Leitbleche 70 eines Streuscheibenpaares 9, 10 am Ende der Ladefläche 1 eines Streufahrzeugs lediglich durch Umkehr des Drehsinnes - Pfeile $P_1$ bzw. $P_2$ - unterschiedliche Streubreiten b bzw. Streuwinkel $a_1$ mit relativ exakter seitlicher Begrenzung G des jeweiligen Streubildes erzielt werden können. Wichtig hierbei ist neben der Größe bzw. der Endpunktbegrenzung der Leitbleche 70 auch die jewilige Stellung der an den Armen 62 verschwenk- und einstellbaren Schleudersterne 56, gemäß der noch folgenden Detailbeschreibung.

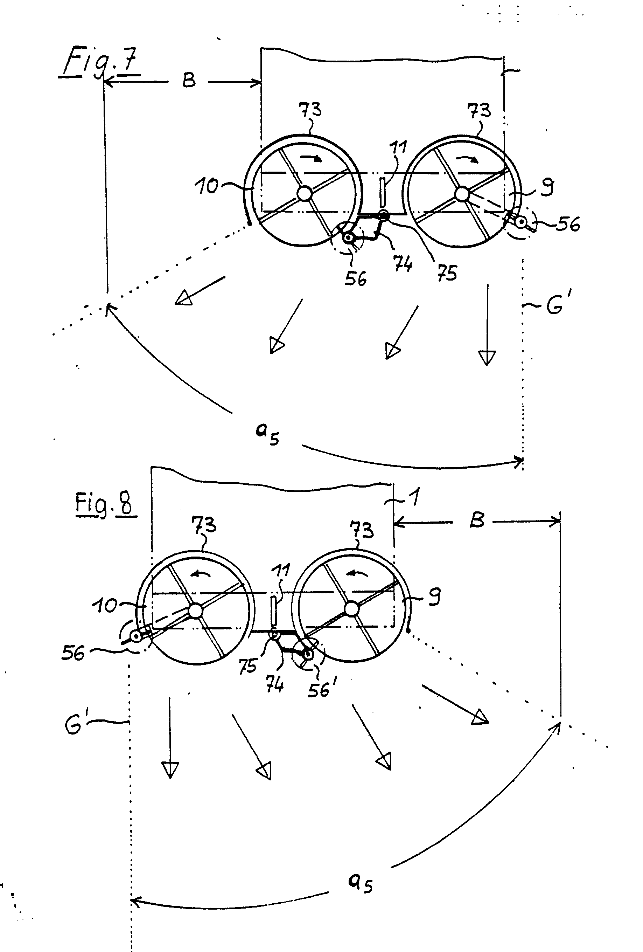

Ausgehend von dieser baulichen bzw. anordnungsgemäßen Ausgestaltung ist es zur Lösung der mit der Erfindung gestellten Aufgabe nunmehr erstmals möglich, daß zur Vermeidung eng nebeneinander liegender Fahrspuren durch ein- oder mehrmaliges Fahren in der gleichen Spur zur Fahrtrichtung F symmetrisch (Fig. 2 bis 4) bzw. unsymmetrisch (Fig. 6 bis 8) liegende Breitstreubilder erzeugt werden, wobei die die seitlichen Begrenzungen der Ladefläche 1 des Streufahrzeuges jeweils überschreitende Streubreite B mindestens einer Fahrzeugspurweite entspricht.

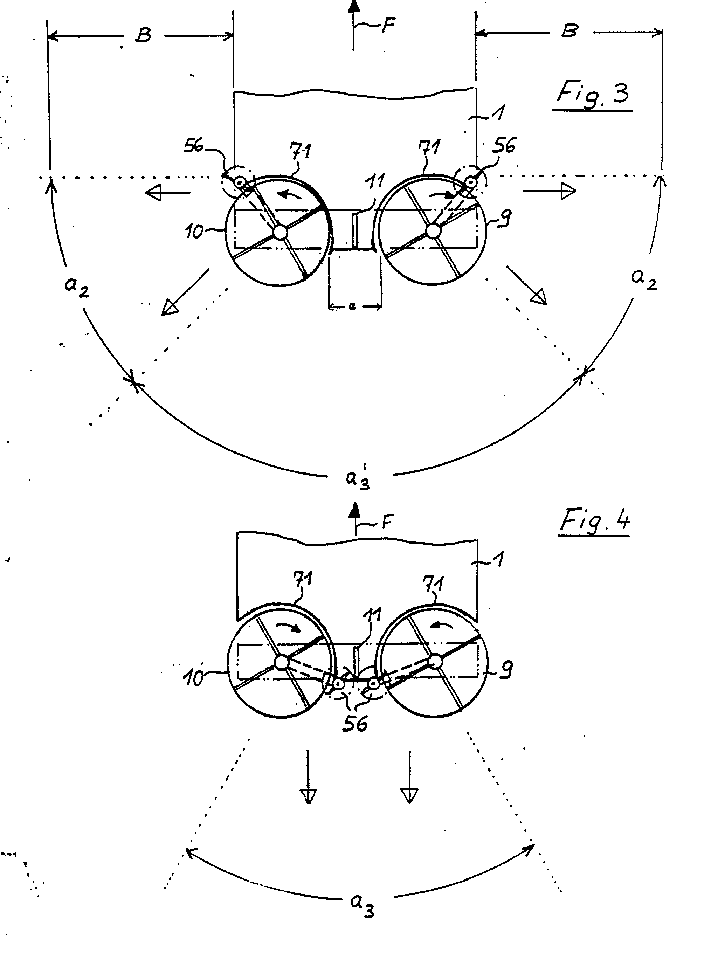

Betrachtet man dazu im weiteren die Fig. 3 und 4, so kann man erkennen, daß beispielsweise in einem ersten Arbeitsgang ein symmetrisches Teilstreubild ($2 \times a_2$ in Fig. 3) im wesentlichen seitlich der Fahrspur auf das Feld aufgebracht und bei mindestens einer weiteren Fahrt in derselben Fahrspur der mittlere Bereich ($a_3$ in Fig. 4) des Gesamtstreubildes ($2 \times a_2 + a_3$) ergänzt wird. Auch hierbei sind ein Drehsinnwechsel, die Umstellung der Schleudersterne von außen (Fig. 3) nach innen (Fig. 4) sowie eine spezielle Anpassung bzw. Gestaltung der Leitbleche 71 erforderlich bzw. zweckmäßig.

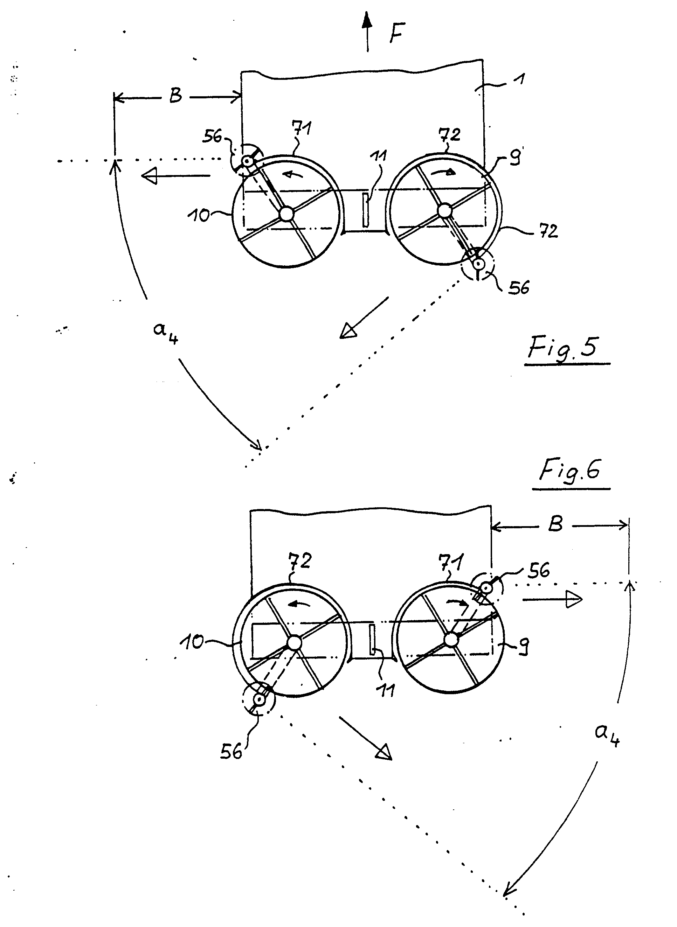

Während in Fig. 5 und 6 noch die Erzeugung eines weiteren, hier jedoch unsymmetrischen Streubildes $a_4$ mit seitlicher Breitstreuung B links oder rechts und entsprechender ungleicher Leitblechausbildung 71 bzw. 72 bei gegenläufigem Drehsinn und ohne Drehsinnwechsel dargestellt ist, zeigen die Fig. 7 und 8 die Möglichkeit, einen Streuwinkel $a_5$ beispielsweise auf einer Seite G' derart exakt zu begrenzen, daß mit einem erfindungsgemäßen Gerät auch entlang von Wegen, z. B. im Gebirge, o.ä. Stellen gestreut werden kann. Hierbei ist jedoch ein gleichlaufender Drehsinn mit Drehsinnwechsel von links auf rechts ebenso notwendig, wie die Verschwenkung des mittigen Schleudersternes 56 mit seiner Halterung 74 um den Drehpunkt 75.

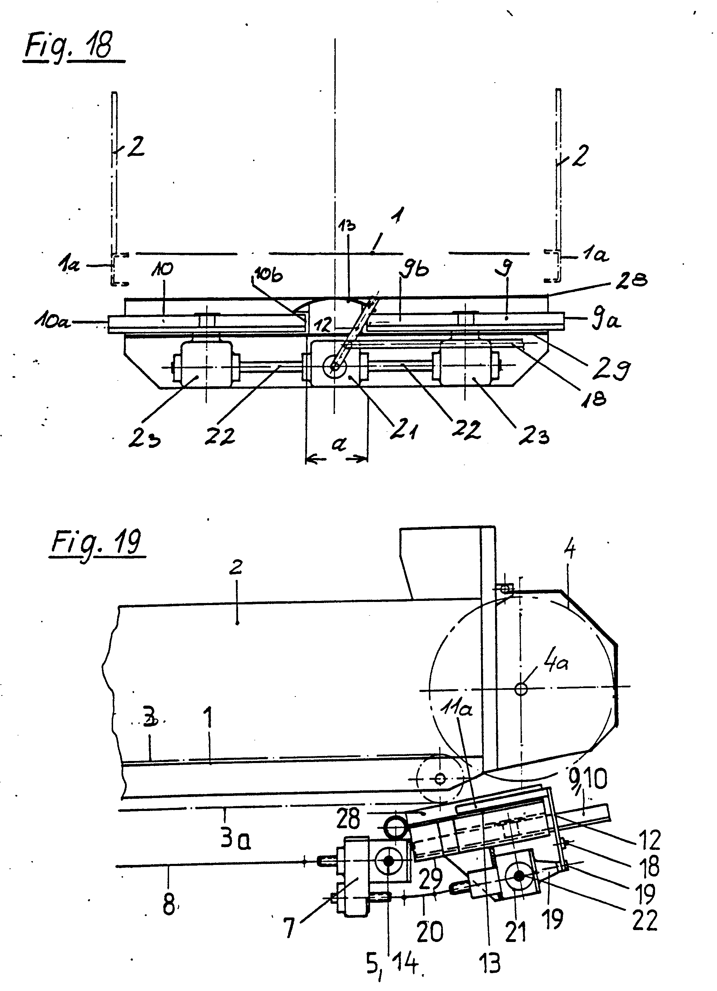

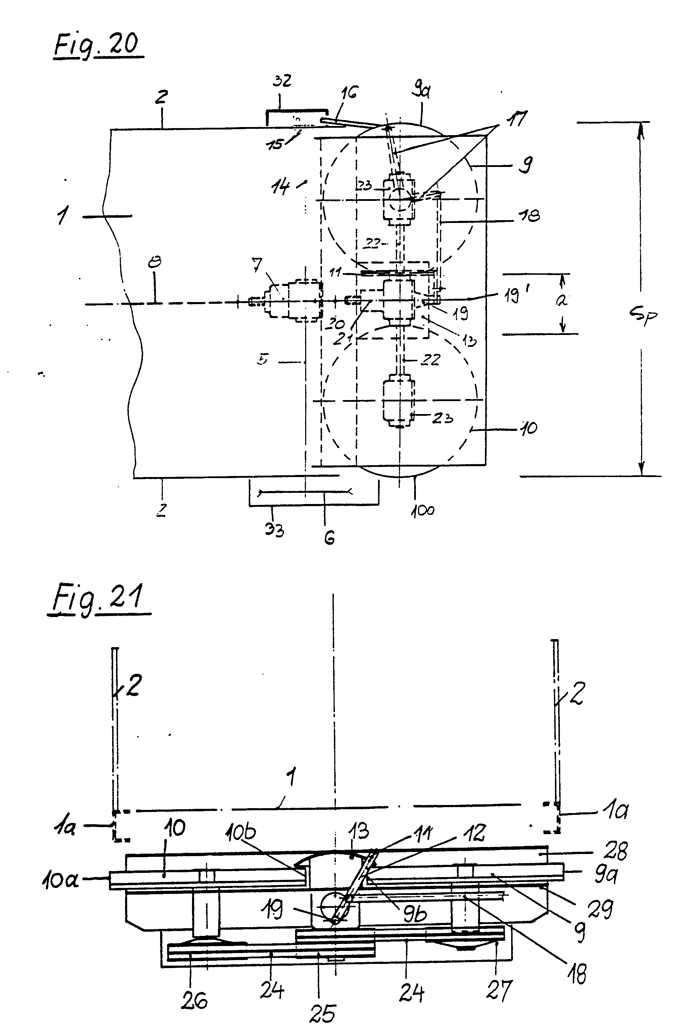

Zum grundsätzlichen mechanischen sowie antriebsmäßigen Aufbau der bislang nur allgemein beschriebenen Streuwerke wird nun auf die Darstellungen der Fig. 18 bis 23 verwiesen.

Der in den Fig. 18 bis 20 dabei in seiner hinteren Partie dargestellte landwirtschaftliche Streuwagen besteht in bekannter Weise aus einer Ladefläche 1 mit seitlichen Laderaumwänden 2, einem Kratzboden 3 und einer endseitig oberhalb dieses Kratzbodens 3 quer zur Fahrtrichtung F liegenden Dosierwalze 4 mit nicht näher dargestellter Antriebsableitung 5, 6 ihrer Rotationswelle 4a vom zentralen Verteilergetriebe 7, das wiederum über eine Verbindungswelle 8 zum ebenfalls nicht dargestellten Zapfwellenanschluß des Schleppers o.dgl. in bekannter Weise führt.

Unterhalb dieser Dosierwalze 4 befindet sich nun in an sich vom Prinzip her bekannter Weise das eigentliche Streuorgan, erfindungsgemäß jedoch ausgebildet als gegenläufig zueinander rotierende, sich nicht überdeckende Streuscheiben 9 und 10, deren äußere Begrenzungen 9a und 10a in Draufsicht gesehen, etwa im Bereich der jeweiligen Seitenwangen 1a der Ladefläche 1 verlaufen und bei dem zur Überbrückung des zwischen den inneren Scheibenbegrenzungen 9b und 10b verbliebenen Freiraumes a eine durch einen hin- und hergehenden Pendelräumer 11, 12 überstrichene Leitfläche 13 vorgesehen ist; angepaßt an den kreisbogenförmigen Bewegungsverlauf des Pendelräumers 11 ist auch der Oberflächenverlauf der Leitfläche 13 konvex ausgebildet. Die reversierende Antriebsbewegung des Pendelräumers 11, 12, der also das mittig von der Dosierwalze 4 auf die Leitfläche 13 fallende Gute wechselweise gleichmäßig zur Seite auf eine der beiden Streuscheiben 9, 10, überleitet, erfolgt ebenfalls vom zentralen Verteilergetriebe 7 aus, über eine Querwelle 14 zu einem seitlich am Fahrzeug liegenden Kurbeltrieb 15, 16 sowie einen z. B. daran anschließenden Schwinghebel 17 mit Gestänge 18, das letztlich an der in einer Konsole 19 oder in einem ähnlichen Drehpunkt 19' gelagerten Führungsstange 12 des Pendelräumers 11 angreift.

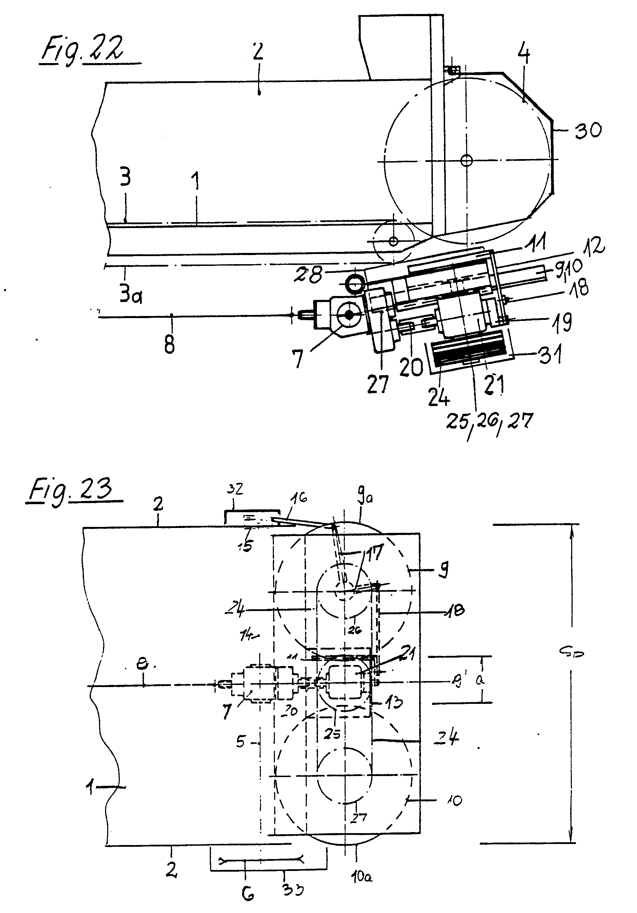

Die Antriebsableitung für die Streuscheiben 9 und 10 kann dabei vom Zentralgetriebe 7 aus über eine Kupplung 20 und ein daran anschließendes, weiteres Winkelgetriebe 21 entweder gemäß Fig. 18 bis 20 von dort durch Abtriebswellen 22 auf unterhalb der Scheiben 9 und 10 angeordnete, zusätzliche Winkelgetriebe 23 erfolgen, oder aber, wie in Fig. 21 bis 23 angedeutet ist, durch Antriebsriemen 24 und entsprechende Riemenscheiben 25, 26, 27.

Dieses erfindungsgemäße System ist somit nicht nur baulich sehr einfach und damit störungsunanfällig, sondern gestattet bereits durch den entgegengesetzten Drehsinn der Streuscheiben 9 und 10 erstmals sowohl ein extrem breites, symmetrisches Ausstreuen beidseits weit über die Fahrspur Sp hinaus, ohne daß die Fahrspur mit bestreut wird, als auch das Breitstreuen einschließlich dieser Spur.

Da außerdem der Drehsinn einer oder beider Scheiben 9, auch in an sich bekannter Weise umschaltbar ausgebildet werden kann, ist auf Wunsch auch das begrenzte Streuen mit geringer Wurfweite, z. B. auf die Fahrspuren, möglich. Dies ist z. B. am Feldrand oder in Parkanlagen von Bedeutung.

Um letztlich noch zu vermeiden, daß von den rotierenden Scheiben 9 und 10 Streugut in Richtung auf das Zentralgetriebe 7 geschleudert wird, sind diese Scheiben 9 und 10 nach vorne, also zum Kratzboden 3 hin, durch bogenförmige Schutzbleche 29 abgedeckt, die in eine vordere Wand 28 übergehen, die erheblich höher angeordnet ist, als die Oberkante der Streurippen, und mit einer an sich bekannten Gummilippe bis etwa an die Unterseite 3a des Kratzbodens 3 heranreicht. Die Positionen 30 bis 33 stellen in den einzelnen Abbildungen lediglich Abdeckungen bewegter, bzw. umlaufender Teile 6 bzw. 16 dar.

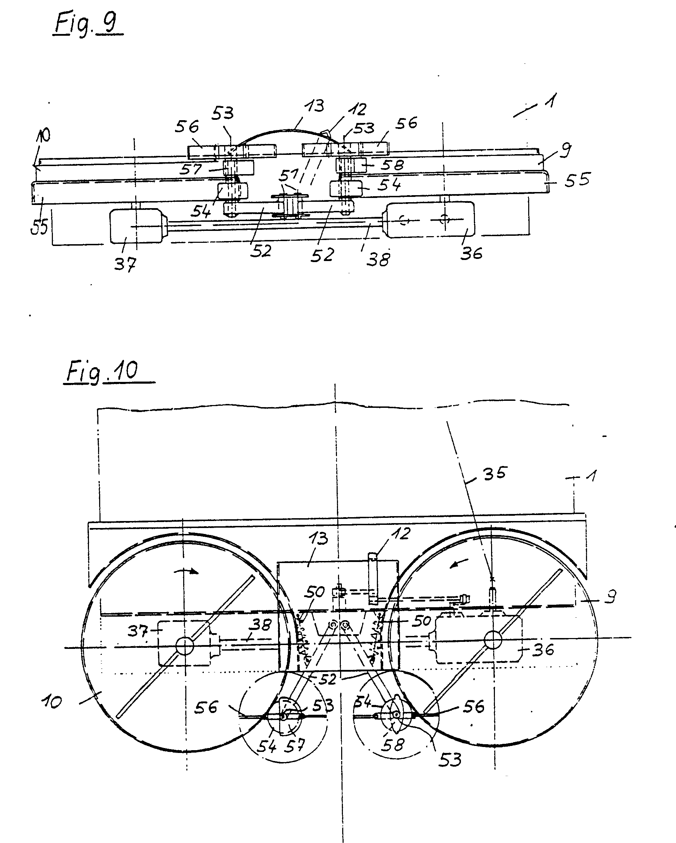

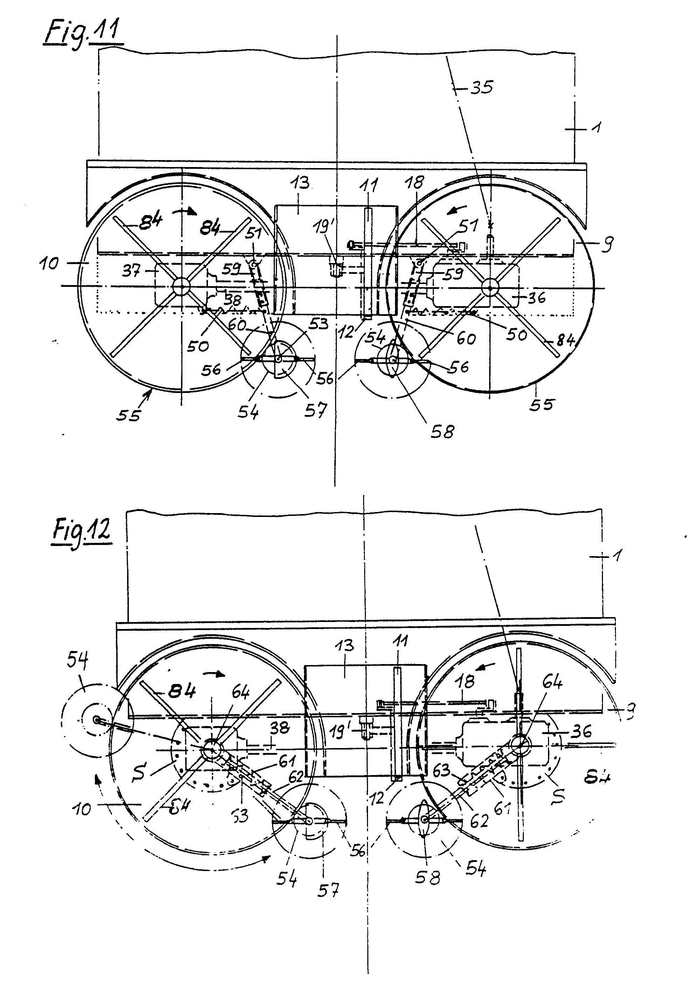

Bei besonders schwierigem Gut kann die Streuarbeit durch die aus den Fig. 9 und 10 entnehmbaren, baulichen Merkmale verbessert werden. Diese bestehen darin, daß unter dem Leitblech 13, zwischen den Streuscheiben 9, 10, mittels Zugfedern 50 zwei um die Gelenke 51 schwenkbaren Arme 52 angeordnet sind, in denen Wellen 53 mit je einem Reibrad 54 gelagert sind, welche vom Bund 55 der Streuscheiben 9, 10 in Drehbewegung versetzt werden, und an ihrem oberen Ende zusätzliche Schleudersterne 56 tragen, die ebenso zu einer besseren Verwirbelung bzw. Verteilung des mittig herausgeschleuderten Gutes beitragen, wie die darunter befindlichen, unterschiedlichen Winkel bzw. Öffnungsstellungen beim Umlauf einnehmenden Mischsegmente 57, 58.

Bei der in Fig. 11 dargestellten Ausführung, sind die eigentlichen Streuscheiben 9 und 10 auf ihrer Oberfläche mit einer Anzahl von Rippen 61a versehen und die Schleudersterne 56 derart angeordnet, daß die diese Schleudersterne 56 tragenden Haltearme aus zwei teleskopartig ineinandergreifenden Teilstücken 59 und 60 bestehen. Weiterhin ist vorgesehen, daß die Gelenke 51 der Schwenkarme 59, 60 außerhalb des Bereiches der Leitfläche 13 am Gestell des Fahrzeuges liegen, und die auf jeden der Schwenkarme 59, 60 wirkende Zugfeder 50 vorzugsweise am ausziehbaren Teil 60 der Schwenkarme 59, 60 angreift.

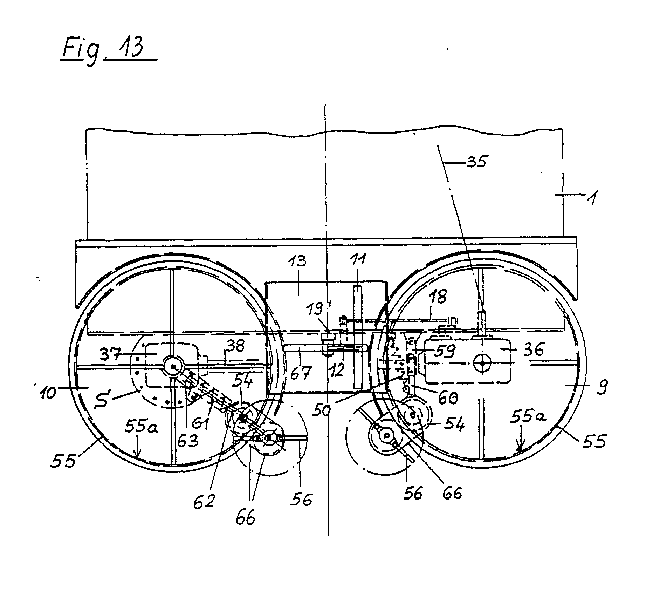

Die Schwenkarme 59, 60 werden also unterhalb jeder Streuscheibe 9, 10 angelenkt, damit sie

einerseits nicht durch herabfallenden Mist verschmutzen und zum anderen, wie in Fig. 12 strichpunktiert angedeutet ist, auch auf die andere Scheibenseite in die Pos. 54' der Reibrolle verlegt und mittels eines Segments S festgesetzt werden können. Die dabei zwangsläufig auftretenden Längenänderungen der Arme werden durch die teleskopartige Ausziehbarkeit ausgeglichen; eine genaue Einstellbarkeit ist der Sinn dieser Anordnung.

Die Ausführung nach Fig. 12 unterscheidet sich baulich von der nach Fig. 11 im übrigen lediglich dadurch, daß die teleskopartig ineinanderragenden Teilstücke 61 und 62 der Schwenkarme konzentrisch von einer Druckfeder 63 umhüllt und an den Drehachsen 64 der Streuscheiben 9, 10 angelenkt sind.

Die beiden Variationsmöglichkeiten der Schwenkarmanlenkung nach den Fig. 11 und 12 sind zudem noch in einer Ausführung denkbar, die in Fig. 13 alternativ angedeutet ist. Hierbei ist vorgesehen, daß die Reibräder 54 jeweils auf der Innenseite 55a des Bundes 55 der Streuscheiben 9, 10 anliegen bzw. durch eine Druck- bzw. Zugfeder 65 bzw. 50 dagegengepreßt werden und die Drehung der Schleudersterne 56 über eine geeignete, unterhalb des Bundes 55 nach außen verlaufende Antriebsverbindung 66 bewirkt wird, wobei zudem der Schwinghebel 12 des Pendelräumers 11 durch eine etwa mittig zur Leitfläche 13 liegenden Schlitzführung 67 hindurchragt. Hierdurch entfällt die störende Querkante gemäß Fig. 11 und 12, die sich mit Mist o.dgl. zusetzen könnte.

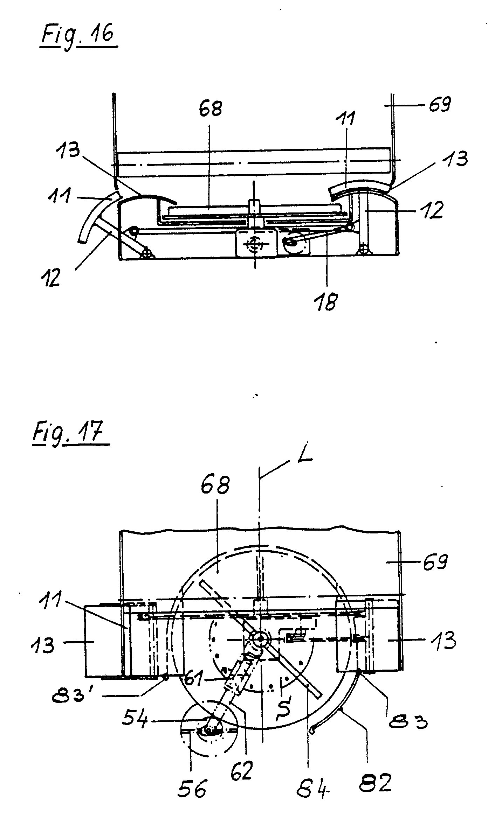

Letztlich ist mit Fig. 16 und 17 noch die Möglichkeit der Anwendung zumindest eines Teiles der zuvor beschriebenen Merkmale auf Streufahrzeuge 69 mit einem einzigen, rotierenden Streuorgan 68 angedeutet. Hierbei ist vorgesehen, daß das Streuorgan 68 mittig zur Fahrzeuglängsachse L liegt und vorzugsweise beidseits sowie möglichst innerhalb der in Längsrichtung verlaufenden Fahrzeugbegrenzungen, dem Streuorgan je eine Leitfläche 13 mit Pendelräumer 11, 12 zugeordnet ist. In gleicher Weise, wie auch hier der Arm 62 des Schleudersternes 54, 56 verschwenkbar und an dem Segment S in jeder beliebigen Winkelstellung festsetzbar ist, muß auch das Leitblech 82 von dem einen Anschlußpunkt 83 auf die gegenüber liegende Seite 83' umsetzbar sein.

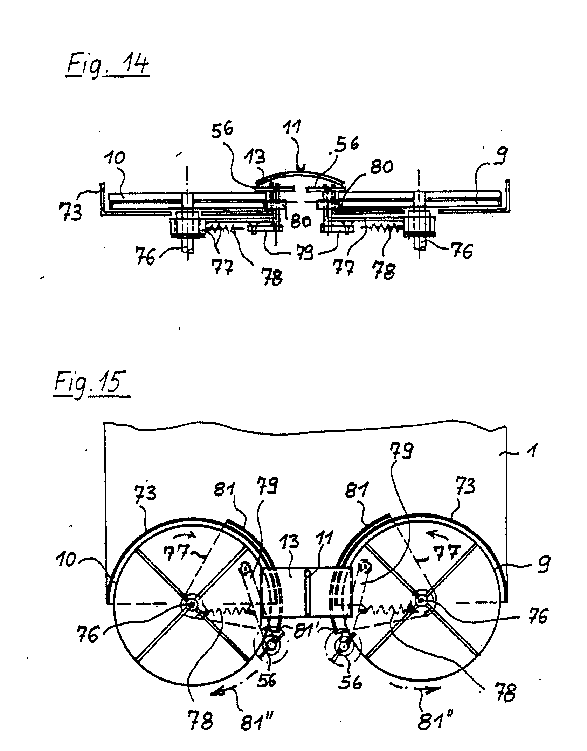

Die Darstellung in Fig. 14 - Vorderansicht - bzw. Fig. 15 - Draufsicht - zeigt in diesem Zusammenhang letztlich noch eine besondere bauliche, bzw. ausführungsgemäße Variante eines Zweischeibenstreuwerkes, bei dem jedes gewünschte Streubild mit exakter seitlicher Streubereichsbegrenzung bei gegenläufigem und ggf. umkehrbarem Drehsinn durch ein Segment 77 erreicht werden kann, das um die jeweiligen Drehachsen 76 der Streuscheiben 9, 10 schwenkbar gelagert ist, einen konzentrisch zu den Leitblechen 73 verlaufenden Rand 81 aufweist und über nicht dargestellte Mittel derart verstellt bzw. eingestellt werden kann, daß seine abgabeseitigen Endpunkte 81' jede beliebige Stellung auf der Schwenkbahn 81" einnehmen können.

Die Schleudersterne 56 sind bei dieser Variante über Arme 79 an den Segmenten 77 angelenkt und werden durch je eine Zugfeder 78 mit ihren Reibrädern 80 an den jeweiligen Bund der Streuteller 9, 10 angedrückt und somit in Drehbewegung versetzt.

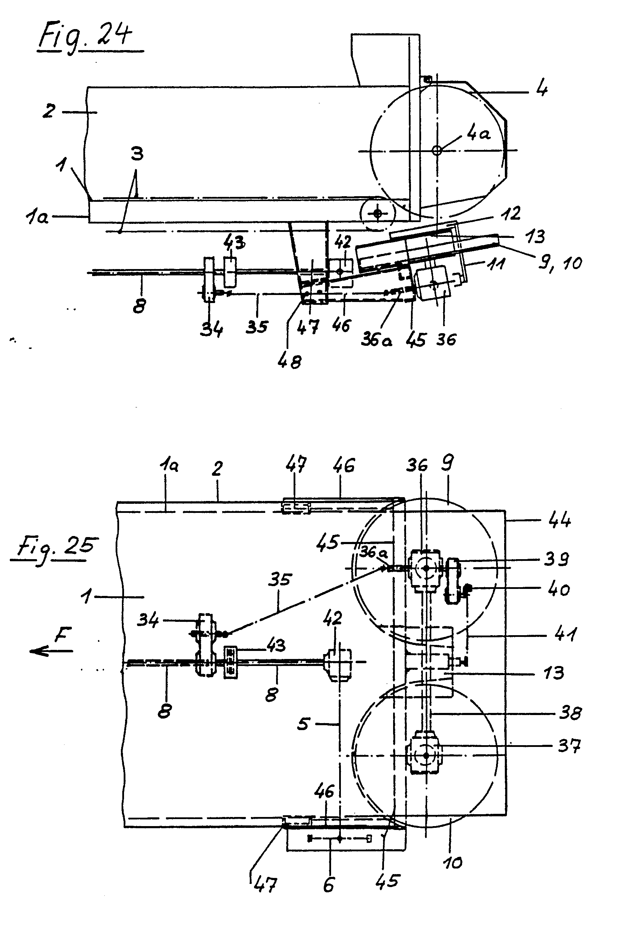

Eine gegenüber den Darstellungen in Fig. 18 - 23 noch vorteilhaftere Antriebsausbildung des Erfindungsgegenstandes ist letztlich noch in den Fig. 24 und 25 angedeutet.

Entgegen der zeichnerischen Getriebeausbildung nach Fig. 18 - 23 ist hier nun der Antrieb der beiden Scheiben 9, 10 durch ein Verteilergetriebe 34 gegeben, das über eine Gelenkwelle 35 auf eines der unterhalb der Scheiben 9, 10 angeordneten Winkelgetriebe 36 und von diesem über die Verbindungswelle 38 auf das andere Getriebe 37 wirkt.

Die Antriebsableitung für den Pendelräumer 11 erfolgt hierbei von einem Untersetzungsgetriebe 39 über eine Kurbel 40 und Schwinge 41 unmittelbar von einem der Scheibengetriebe 36 bzw. 37 aus. Bei dieser Getriebeausbildung ist zwischen Verteilergetriebe 34 und Winkeltrieb 42, zum Kratzboden bzw. zur Fräswalze 4 hin eine Kupplung 43 geschaltet.

In baulich weiterer Ausgestaltung der vorliegenden Erfindung ruhen die Streuscheiben 9, 10 mit ihren Getrieben 36, 37 nun in einem Rahmen 44 bzw. an einem Querträger 45, von dem aus sich Seitenträger 46 in Fahrtrichtung F beidseits der Laderaumbordwände 2 erstrecken und mit ihren freien Enden 46a an Konsolen 47, die fest an den Seitenwangen 1a des Fahrzeugrahmens sitzen, über Schrauben, Stecker 48 o.ä. angeschlossen sind. Diese bauliche Maßnahme in Verbindung mit der speziellen Antriebsausbildung ermöglicht ein rasches An- und Abbauen des gesamten Streuaggregates und macht das Fahrzeug damit vielseitig, also nicht nur als Streuwagen, verwendbar.

**Patentansprüche**

1. Landwirtschaftliches Streufahrzeug zum Transportieren und gleichmäßigen Ausstreuen von Stallmist o.ä. Düngemitteln auf Ackerböden, Wiesen o.dgl. , mit wenigstens einer, unter dem rückwärtigen Ende einer mit Kratzboden (3) versehenen Ladefläche (1) angeordneten, rotierend angetriebenen Streuscheibe (9 bzw. 10), deren Durchmesser kleiner ist als die Breite der Ladefläche (1) und deren dem Kratzboden (3) benachbarter Teil ihres Umfangs durch bogenförmige, in etwa vertikale Begrenzungswände (28) abgeschirmt ist, und wenigstens eine oberhalb dieser Scheibe (9 bzw. 10) quer zur Fahrtrichtung liegende Dosierwalze (4) sowie ein unterhalb des Kratzbodens (3)

angeordnetes, zentrales Verteilergetriebe (7) aufweist,

dadurch gekennzeichnet,

daß neben und oberhalb der Streuscheibe (9 bzw. 10) eine mit einem hin- und hergehenden- Pendelräumer (11, 12) versehene Leitfläche (13) zur Beaufschlagung der Streuscheibe (9 bzw. 10) mit zusätzlichem Streugut von der Seite her angeordnet und diese Leitfläche (13) mit einem der kreisbogenförmigen Bewegungsbahn des Pendelräumers (11, 12) angepaßten Oberflächenverlauf versehen ist.

2. Landwirtschaftliches Streufahrzeug nach Anspruch 1,

dadurch gekennzeichnet,

daß die mit einer mechanischen Fördereinrichtung versehene Leitfläche (13) zwischen zwei, wenigstens zeitweise zueinander gegenläufig rotierenden, in einem horizontalen Abstand (a) voneinander angeordneten Streuscheiben (9, 10) angeordnet ist.

3. Landwirtschaftliches Streufahrzeug nach einem der Ansprüche 1 und 2,

dadurch gekennzeichnet,

daß die reversierende Antriebsbewegung des Pendelräumers (11, 12) vom zentralen Verteilergetriebe (7) aus über einen seitlich an einer der Fahrzeugwangen (1a) liegenden Kurbeltrieb (15, 16) mit daran angeschlossenen Gestängeteilen (17, 18) abgeleitet ist

4. Streufahrzeug nach einem der Ansprüche 1 bis 3,

dadurch gekennzeichnet,

daß der Schwinghebel (12) des Pendelräumers (11) durch eine etwa mittig der Leitfläche (13) liegende Schlitzführung (67) hindurchragt (Fig. 13).

5. Streufahrzeug nach einem oder mehreren der vorhergehenden Ansprüche,

dadurch gekennzeichnet,

daß zum Antrieb der Streuscheiben (9 und 10) je ein durch eine starre Verbindungswelle (38) miteinander gekoppeltes Winkelgetriebe (36 und 37) dient, deren eines über eine Gelenkwelle (35) mit dem zentralen Verteilergetriebe (34) in lösbarer Antriebsverbindung steht, und daß einem der Winkelgetriebe (36) ein Untersetzungsgetriebe (39) nachgeordnet und von diesem über Kurbel (40) und Schwinge (41) die reversierenden Antriebsbewegung des Pendelräumers (11, 12) abgeleitet ist.

6. Streugerät nach einem der vorhergehenden Ansprüche,

dadurch gekennzeichnet,

daß die Hauptabwurfrichtung beider Streuscheiben unabhängig voneinander durch an den Enden der Abschirmwände anbringbare, einstellbare Leitelemente (73, 77, 81) veränderbar ist, wobei letztere als wenigstens einer Streuscheibe (9, 10) zugeordnete, um deren Drehachse (76) schwenkbare, bogenförmge und vertikale Wandsegmente (77, 81) ausgebildet sind, die auf einer zu den Leitblechen (73) konzentrische verlaufenden Kreisbahn (81'') verschwenkbar und in verschiedenen Stellungen der Endpunkte (81') der Ränder (81) feststellbar sind.

7. Streufahrzeug nach mindestens einem der vorhergehenden Ansprüche,

dadurch gekennzeichnet,

daß die Leitelemente als das Streugut zusätzlich zerkleinernde und feiner verteilende Schleudersterne (56) ausgebildet und vorzugsweise herstellbar im streuseitigen Bereich (a) zwischen den Scheiben (9, 10) und der Mittelkonsole (13) angeordnet sind.

8. Streufahrzeug nach mindestens einem der vorhergehenden Ansprüche

dadurch gekennzeichnet,

daß die Schleudersterne (56) wenigstens mit einem Teil ihres Umfanges oberhalb der Scheiben (9, 10) umlaufen und an je einer vertikalen Welle (53) befestigt sind, die an schwenkbaren Armen (52) gelagert sind, die an der Unterseite der Mittelkonsole (13) angelenkt sind, und an deren unteren Enden je ein Antriebselement (54) sitzt, welches durch an den Schwenkarmen (52) angreifende Zugfedern (50) mit einem unter der Streuscheibe angebrachten Laufkranz (55) kraftschlüssig berührt wird.

9. Streufahrzeug nach einem der vorhergehenden Ansprüche,

dadurch gekennzeichnet,

daß die Schleudersterne (56) über Schwenkarme (79) an der Unterseite der Segmente (77) angelenkt und durch Zugfedern (78) mit ihren Reibrollen (80) an die jeweiligen Bunde (9a, 10a) der Streuscheiben (9, 10) gedrückt werden.

10. Streufahrzeug nach einem der vorhergehenden Ansprüche,

gekennzeichnet durch

Anbringung zusätzlicher Mischsegmente (57, bzw. 58) an den vertikalen Drehachsen (53) unterhalb der Schleudersterne (56).

11. Streufahrzeug nach einem der vorhergehenden Ansprüche,

dadurch gekennzeichnet,

daß die die Schleudersterne (56) tragenden Haltearme aus zwei teleskopartig ineinandergreifenden Teilstücken (59, 60) bestehen (Fig. 11), deren Anlenkpunkte (51) außerhalb des Bereichs der Leitfläche (13) am Gestell des Fahrzeugs (1) liegen,

wobei die Zugfeder (50) vorzugsweise am ausziehbaren Teil (60) der Schwenkarme (59, 60) angreift.

12. Streifahrzeug nach einem oder mehreren vorhergehenden Ansprüchen,

dadurch gekennzeichnet,

daß die teleskopartig ineinanderragenden Teilstüche (61 und 62) der Schwenkarme konzentrisch von einer Druckfeder (63) umhüllt und an den Drehachsen (64) den Drehachsen (64) der Streuscheiben (9, 10) angelenkt sind (Fig. 12).

13. Streufahrzeug nach einem oder mehreren der vorhergehenden Ansprüche,

dadurch gekennzeichnet,

daß die Reibräder (54) jeweils auf der Innenseite (55a) des Bundes (55) der Streuscheiben (9, 10) anliegen bzw. durch eine Druck- (65) bzw. Zugfeder (50) dagegengepreßt werden und die Drehung der Schleudersterne (56) über eine geeignete, unterhalb des Bundes (55) nach außen verlaufende Antriebsverbindung (66) bewirkt wird.

14. Streugerät nach einem der vorhergehenden Ansprüche,

dadurch gekennzeichnet,

daß die äußeren Streuscheibenbegrenzungen (9a bzw. 10a) in Draufsicht gesehen etwa im Bereich der jeweiligen Seitenwangen (1a) der Ladefläche (1) verlaufen.

## Claims

1. An agricultural spreader vehicle for the transport and uniform spreading of stable manure or other fertilizers over arable soil, pasture or the like, having at least one spreader disc (9 resp. 10) which is arranged under the rear end of a loading area (1) provided with a scraper floor (3) and is driven in rotation and the diameter of which is less than the width of the loading area (1) and the part of the circumference of which, adjacent to the scraper floor (3), is screened by arcuate approximately vertical boundary walls (28), and exhibiting at least one proportioner roll (4) lying above the said disc (9 resp. 10) transversely to the direction of travel as well as a central distributor gear (7) arranged underneath the scraper floor (3),

characterized in that

beside and above the spreader disc (9 resp. 10) is arranged a guide area (13) provided with a swinging rake (11, 12) going to and fro, for loading the spreader disc (9 resp. 10) from the side with additional material for spreading and the said guide area (13) is provided with a surface trend adapted to the arcuate path of motion of the swinging rake (11, 12).

2. An agricultural spreader vehicle as in Claim 1,

characterized in that

the guide area (13) provided with a mechanical transporter is arranged between two spreader discs (9, 10) arranged at a distance (a) apart horizontally and rotating at least from time to time in opposite directions with respect to one another.

3. An agricultural spreader vehicle as in one of the Claims 1 and 2,

characterized in that

the reversing driving motion of the swinging rake (11, 12) is derived from the central distributor gear (7) via a crank gear (15, 16) lying at the side of one of the vehicle sidewalls (1a), and rod parts (17, 18) connected to the former.

4. A spreader vehicle as in one of the Claims 1 to 3,

characterized in that

the rocking lever (12) of the swinging rake (11) projects through a slot guide (67) lying in about the middle of the guide area (13) (Figure 13).

5. A spreader vehicle as in one or more of the preceding Claims,

charaterized in that

for the drive of the spreader discs (9 and 10) respective angular gears (36 and 37) are used, coupled together through a rigid connecting shaft (38), one of them being in releasable driving connection via a cardan shaft (35) to the central distributor gear (34), and that a reduction gear (39) is arranged after one of the angular gears (36) and from it is derived via a crank (40) and a link (41) the reversing driving motion of the swinging rake (11, 12).

6. A spreader appliance as in one of the preceding Claims,

characterized in that

the main directions of discharge from the two spreader discs may be altered independently of one another through adjustable guide members (73, 77, 81) which may be fitted at the ends of the screen walls, the said guide members being made as arcuate and vertical wall segments (77, 81) which are associated with at least one spreader disc (9, 10) and able to pivot about the axis of rotation (76) of the latter, and which are able to pivot along a circular path (81″) running concentrically with the guideplates (73) and may be fixed in different positions of the end points (81′) of the edges (81).

7. A spreader vehicle as in at least one of the preceding Claims,

characterized in that

the guide members are made as slinger stars (56) which additionally fragment and mare finely distribute the material to be spread, and are preferably arranged to be adjustable in the range (a) on the spreading side between the discs (9, 10) and the central bracket (13).

8. A spreader vehicle as in at least one of the preceding Claims,

characterized in that

the slinger stars (56) revolve with at least part of their circumference above the discs (9, 10) and are fastened to respective vertical shafts (53) which are supported on pivotable arms (52) which are hinged to the underside of the central bracket (13) and on the bottom ends of which are seated respective drive members (54) which through tension springs (50) engaging with the pivoting arms (52) are brought hard up against a friction ring (55) fitted under the the spreader disc.

9. A spreader vehicle as in one of the preceding Claims,

characterized in that

the slinger stars (56) are hinged via pivoting arms (79) to the underside of the segments (77) and through tension springs (78) are pressed by their friction rollers (80) against the respective collars (9a, 10a) on the spreader discs (9, 10).

10. A spreader vehicle as in one of the preceding Claims,

characterized in that

the application of additional mixer segments (57 resp. 58) to the vertical axes of rotation (53) underneath the slinger stars (56).

11. A spreder vehicle as in one of the preceding Claims,

characterized in that

the supporting arms carrying the slinger stars (56) consist of two parts (59, 60) interengaging telescopically (Figure 11), the points of hinge (51) of which lie on the frame of the vehicle (1) outside the region of the guide area (13), the tension spring (50) preferably engaging with the telescopic part (60) of the pivoting arm (59, 60).

12. A spreader vehicle as in one or more of the preceding Claims,

characterized in that

the telescopically interengaging parts (61 and 62) of the pivoting arms are envelopped concentrically by a compression spring (63) and are hinged to the axes of rotation (64) of the spreader discs (9, 10) (Figure 12).

13. A spreader vehicle as in one or more of the preceding Claims,

characterized in that

the friction wheels (54) respectively rest or are respectively pressed by a compression spring (65) or tension spring (50) respectively against the inside (55a) of the collar (55) on the spreader disc (9, 10) and the turning of the slinger stars (56) is effected via a suitable drive connection (66) running to the outside underneath the collar (55).

14. A spreader appliance as in one of the preceding Claims,

characterized in that

the outer boundaries (9a resp. 10a) of the spreader discs seen in plan run approximately in the region of the respective sidewalls (1a) of the load area (1).


**Revendications**

1. Véhicule d'épandace agricole servant au transport et à l'épandage uniforme de fumier d'étable ou d'engrais analogues sur des champs, des prés, etc...., comprenant, situé sous l'extémité arrière de la surface de chargement (1) munie d'un plancher à raclettes (3), au moins un disque d'épandage (9, respectivement 10) entraîné en rotation, dont le diamètre est inférieur a la largeur de la surface de chargement (1) et dont la partie de sa circonférence avoisinant le plancher à raclettes (3) est protégée par des parois (20) cintrées et sensiblement verticales, et étant pourvu d'au moins un cylindre doseur (4) qui est disposé au-dessus dudit disque (9, respectivement 10) et s'étend transversalement à la direction d'avance, ainsi que d'un carter de distribution central (7) situé en-dessous du plancher à raclettes (3), caractérisé par le fait qu'à côté et au-dessus du disque d'épandage (9, respectivement 10) est disposée une aire de guidage (13) munie d'un râcleur oscillant (11, 12) à mouvements alternatifs servant a alimenter par le côté le disque d'épandage (9, respectivement 10) en produit à épandre supplémentaire et que cette aire de guidage (13) présente une face supérieure adaptée à la trajectoire en arc de cercle décrite par le râcleur oscillant (11, 12).

2. Véhicule d'épandage agricole selon la revendication 1, caractérisé par le fait que l'aire de guidage (13) munie d'un dispositif de déplacement mécanique est fixée entre deux disques d'épandage, (9, 10) tournant au moins de temps en temps l'un vers l'autre et étant séparés l'un de l'autre par un écart horizontal (a).

3. Véhicule d'épandage agricole selon l'une des revendications 1 et 2 caractérisé par le fait que le mouvement d'entraîmenent réversible du râcleur oscillant (11, 12) part du carter de distribution central (7) et passe par un mécanisme à manivelle (15, 16) situé sur l'un des flancs (1a) du véhicule et des tringles (17, 18) rattachées à ce mécanisme.

4. Véhicule d'épandage agricole selon l'une des revendications 1 à 3, caractérisé par le fait que le levier d'oscillation (12) du râcleur oscillant (11) traverse une rainure de guidage (67) située environ au milieu de l'aire de guidage (13) (figure 13).

5. Véhicule d'épandage agricole selon l'une ou plusieurs des revendications précédentes, caractérisé par le fait que l'entraînement des disques d'épandage (9 et 10) est realisé au moyen de carters de renvoi (36 et 37) couplés entre-eux par un arbre de transmission rigide (38), l'un de ces carters de renvoi étant lié de façon amovible au moyen d'un arbre de transmission articulé (35) au carter de distribution central (34), et qu'un démultiplicateur (39) est prévu à la suite d'un des carters de renvoi (36) et que le mouvement d'entraînement réversible du râcleur oscillant (11, 12) part de ce démultiplicateur (39) par l'intermédiaire d'une manivelle (40) et d'un levier oscillant (41).

6. Véhicule d'épandage agricole selon l'une des revendications précédentes, caractérisé par le fait que la direction d'épandage principale des deux disques peut être modifiée indépendamment l'une de l'autre par des éléments de guidage réglables (73, 77, 81) pouvant être placés aux extrémités des parois de protection, ces éléments de guidage ayant la forme de segments de parois (77, 81) cintrés et verticaux, associés à au moins un disque d'épandage (9, 10) et pouvant pivoter autour de son axe de rotation (76), lesquels segments (77; 81) peuvent être déplacés sur une trajectoire circulaire (81") concentrique aux tôles de guidage (73) et être arrêtés dans différentes positions des points extrêmes (81') des bords (81).

7. Véhicule d'épandage agricole selon au moins une des revendications précédentes, caractérisé par le fait que les éléments de guidage ont la forme de rotors (56) réduisant davantage et répartissant plus finement le produit à épandre et qui sont préférentiellement disposés de manière réglable dans la zone (a) sur le côté où s'effectue l'épandage, entre les disques (9, 10) et la console centrale (13).

8. Véhicule d'épandage agricole selon au moins une des revendications précédentes, caractérisé par le fait que les rotors (56) tournent avec au moins une partie de leur circonférence au-dessus des disques (9, 10) et qu'ils sont fixés chacun à un axe vertical (53), ces axes étant situés sur des bras pivotants (52) qui sont articulés à la face inférieure de la console centrale (13) et sur les extrémités inférieures de chacun desquels se trouve un élément d'entraînement (54) qui est entraîné par adhérence par une couronne de roulement (55) fixée sous le disque d'épandage, avec laquelle il est maintenu en contact au moyen de ressorts de traction (50) tirant sur les bras pivotants (52).

9. Véhicule d'épandage agricole selon l'une des revendications précédentes, caractérisé par le fait que les rotors (56) sont articulés au moyen de bras pivotants (79) sur le côté inférieur des segments (77) et qu'ils sont poussés avec leurs gallets de friction (80) contre les bords respectifs (9a, 10a) des disques d'épandage (9, 10) au moyen de ressorts de traction (78).

10. Véhicule d'épandage agricole selon l'une des revendications précédentes caractérisé par l'adjonction de segments mélangeurs supplémentaires (57, respectivement 58) sur les axes de rotation verticaux (53), sous les rotors (56).

11. Véhicule d'épandage agricole selon l'une des revendications précédentes, caractérise par le fait que les bras porteurs des rotors (56) sont composés de deux tronçons (59, 60) engagés l'un dans l'autre de manière téléscopique (fig. 11), dont les points d'articulation (51) se situent sur le châssis du véhicule (1) en-dehors de la zone de l'aire de guidage (13), le ressort de traction (50) s'appliquant préférentiellement sur la partie coulissante (60) des bras pivotants (59, 60).

12. Véhicule d'épandage agricole selon l'une ou plusieurs des revendications précédentes, caractérise par le fait que les tronçons téléscopiques (61 et 62) des bras pivotants sont entourés concentriquement par un ressort de pression (63) et sont articulés sur les axes de rotation (64) des disques d'épandage (9, 10) (fig. 12).

13. Véhicule d'épandage agricole selon l'une ou plusieurs des revendications précédentes, caractérisé par le fait que les roues de friction (54) sont chaucune en contact avec la face intérieure (55a) de la collerette (55) des disques d'épandage (9, 10), respectivement sont poussées contre au moyen d'un ressort de pression (65) ou d'un ressort de traction (50) et que la rotation des rotors (56) ou d'un ressort de traction (50) et que la rotation des rotors (56) est assurée par une transmission (66) appropriée s'étendant vers l'extérieur sous la collerette (55).

14. Véhicule d'épandage selon l'une des revendications précédentes, caractérisé par le fait que, vu de dessus, les limites extérieures (9a ou 10a) des disques d'épandage se situent environ dans la zone des flancs respectifs de la surface de chargement (1).

*Fig. 1*

*Fig. 2*

*Fig. 3*

*Fig. 4*

_Fig.5_

_Fig.6_

Fig.7

Fig.8

## Fig. 9

## Fig. 10

Fig.11

Fig.12

Fig. 13

Fig. 14

Fig. 15

Fig. 16

Fig. 17

Fig. 18

Fig. 19

## Fig. 20

## Fig. 21

Fig.22

Fig.23

_Fig. 24_

_Fig. 25_